# EUROPEAN PATENT APPLICATION

(11) **EP 4 675 930 A1**
(43) Date of publication of application: **07.01.2026**
(21) Application number: 24186038.6
(22) Date of filing: 02.07.2024
(51) Int. Cl.: H04B 1/00, H04B 1/40, H04B 7/06, H04B 7/08

(54) **INTEGRATED CIRCUIT FOR A MODULAR DIGITAL SIGNAL PROCESSOR**

(71) Applicant: Airbus Defence and Space Limited, Stevenage Hertfordshire SG1 2AS (GB)
(72) Inventor: TUNNICLIFFE, Sam, Stevenage (GB); MASTON, Gabriel, Stevenage (GB); BISHOP, Andrew, Stevenage (GB)
(74) Representative: Cork, Robert

(57) **Abstract**

An integrated circuit for a modular digital signal processor comprises a plurality of receivers, a plurality of channelisers, a combined switching and beamforming network, a plurality of combiners, and a plurality of digital-to-analogue converters (DACs). The combined switching and beamforming network is operable to perform switching and beamforming on first channelised signals received from the channelisers, and/or on one or more second signals, to obtain a plurality of first beamformed signals. The second signals can comprise second channelised signals and/or second beamformed signals received from one or more other components of the modular digital signal processor. The first and/or second beamformed signals are combined into respective digital output signals by the combiners, and converted into analogue output signal by the DACs, or transmitted over a wider beamforming network comprised of a plurality of such integrated circuits. A modular digital signal processor comprising a plurality of the integrated circuits is also disclosed, together with a signal processing apparatus comprising the modular digital signal processor and an analogue beamformer.

## Description

### Technical Field

The present invention relates to digital signal processing, and in particular to an integrated circuit for a modular digital signal processor.

### Background

Digital BeamForming (DBF) involves the digitisation and collection of beam contributions from antenna elements to a DBF node, together with the application of beam weights. For example, each DBF node may be implemented as an application-specific integrated circuit (ASIC) or a field-programmable gate array (FPGA).

DBF is typically performed across a Digital BeamForming Network (DBFN) in which functions such as digitisation, switching, and beam weight application are distributed across groups of DBF nodes that are arranged into columns (commonly referred to as 'ranks'). For example, one rank may be used to perform digitisation, another rank may be used to perform beamforming, and so on. The nodes (e.g. ASICs) in each rank are connected via interconnections such as high-speed serial links (HSSL), which consume power. However, a drawback of existing DBFN architectures is that as the number of nodes and ranks increases, for example to increase the number of antenna elements, capacity or flexibility, the number of interconnections increases and consequently the total power consumption of the network also increases.

### Summary of the Invention

According to a first aspect of the present invention, there is provided an integrated circuit for a modular digital signal processor, the integrated circuit comprising: a plurality of receivers, each operable to convert a respective analogue input signal to a respective one of a plurality of digital input signals; a plurality of channelisers each operable to separate a respective one of the plurality of digital input signals into respective first channelised signals; a combined switching and beamforming network operable to perform switching and beamforming on said first channelised signals and/or on one or more second signals to obtain a plurality of first beamformed signals, wherein said one or more second signals comprise second channelised signals and/or second beamformed signals received from one or more other components of the modular digital signal processor; a plurality of combiners each operable to combine a respective plurality of said first and/or second beamformed signals into a respective one of a plurality of digital output signals; and a plurality of digital-to-analogue converters (DACs) each operable to convert a respective one of said plurality of digital output signals to a respective analogue output signal.

In some embodiments according to the first aspect, at least one of the plurality of receivers is an analogue-to-digital converter (ADC).

In some embodiments according to the first aspect, at least one of the plurality of receivers is a superheterodyne receiver.

In some embodiments according to the first aspect, the integrated circuit is configured in a transmit beamform (TxBF) mode in which the combined switching and beamforming network is configured to perform switching and beamforming on said second signals to obtain the plurality of first beamformed signals.

In some embodiments according to the first aspect, the integrated circuit is configured to disable some or all of the plurality of channelisers, and/or some or all of the plurality of receivers, and/or some of the plurality of DACs, and/or some of the plurality of combiners, when operating in the TxBF mode, thereby to reduce a power consumption of the integrated circuit.

In some embodiments according to the first aspect, the combined switching and beamforming network is further operable to route one or more of said first channelised signals and first beamformed signals to one or more other components of the modular digital signal processor.

In some embodiments according to the first aspect, the integrated circuit is configured in a receive beamform (RxBF) mode in which the combined switching and beamforming network is configured to perform switching and beamforming on said first channelised signals to obtain the plurality of first beamformed signals.

In some embodiments according to the first aspect, the integrated circuit is configured to disable some or all of the plurality of combiners, and/or some or all of the plurality of DACs, and/or some of the plurality of channelisers, and/or some of the plurality of receivers, when operating in the RxBF mode, thereby to reduce a power consumption of the integrated circuit.

In some embodiments according to the first aspect, the integrated circuit is configured in a bidirectional mode in which the combined switching and beamforming network is configured to receive said first channelised signals from one or more of the plurality of channelisers of the integrated circuit, wherein the combined switching and beamforming network is configured to route at least some of the first beamformed signals to one or more of said plurality of combiners of the integrated circuit.

In some embodiments according to the first aspect, in the bidirectional mode the combined switching and beamforming network is configured to perform switching and beamforming on said first channelised signals to obtain the plurality of first beamformed signals.

In some embodiments according to the first aspect, the integrated circuit is configured to disable one or more of the receivers, DACs, channelisers and/or combiners that are not required by a current configuration of the integrated circuit when operating in the bidirectional mode, thereby to reduce a power consumption of the integrated circuit.

In some embodiments according to the first aspect, the combined switching and beamforming network comprises a plurality of beamforming engines.

In some embodiments according to the first aspect, the integrated circuit is configured to disable said one or more unused beamforming engines when operating in the current configuration, thereby to reduce a power consumption of the integrated circuit.

In some embodiments according to the first aspect, the combined switching and beamforming network comprises: a pre-beamforming switch; a beamformer comprising said plurality of beamforming engines; and a post-beamforming switch.

In some embodiments according to the first aspect, the pre-beamforming switch is configured to direct the plurality of first channelised signals and/or the plurality of second signals to a subset of the plurality of beamforming engines, such that one or more other ones of the plurality of beamforming engines are unused in a current configuration of the integrated circuit.

In some embodiments according to the first aspect, the integrated circuit comprises a plurality of serialisers and/or a plurality of deserialisers for sending or receiving signals to or from said one or more other components, wherein the integrated circuit is configured to disable one or more unused ones of said plurality of serialisers and/or said plurality of deserialisers, thereby to reduce a power consumption of the integrated circuit.

According to a second aspect of the present invention, there is provided a modular digital signal processor comprising a plurality of integrated circuits according to the first aspect.

In some embodiments according to the second aspect, the plurality of integrated circuits comprise: one or more first integrated circuits according to the first aspect; and one or more second integrated circuits according to the first aspect, wherein said one or more other components of the modular digital signal processor, from which the combined switching and beamforming network of each of said one or more second integrated circuits is configured to receive said one or more second signals, comprise the one or more first integrated circuits.

In some embodiments according to the second aspect, the plurality of integrated circuits are arranged into: a receive rank comprising one or more integrated circuits according to the first aspect, configured in the RxBF mode; and a transmit rank comprising one or more integrated circuits according to the first aspect, configured in the TxBF mode.

In some embodiments according to the second aspect, the modular digital signal processor comprises a switch rank for routing signals between the receive rank and the transmit rank.

In some embodiments according to the second aspect, the switch rank comprises one or more integrated circuits according to the first aspect, wherein respective combined switching and beamforming networks of said one or more integrated circuits of the switch rank are configured to route said signals between the receive rank and the transmit rank.

In some embodiments according to the second aspect, the combined switching and beamforming networks of said one or more integrated circuits of the switch rank are further configured to perform beamforming on said signals routed between the receive rank and the transmit rank.

According to a third aspect of the present invention, there is provided a signal processing apparatus, comprising: a modular digital signal processor according to the second aspect, wherein at least some of the combined switching and beamforming networks of the plurality of integrated circuits of the modular digital signal processor are configured to perform beamforming; and an analogue beamformer.

In some embodiments according to the third aspect, the analogue beamformer comprises: an analogue frontend configured to provide a plurality of beamformed analogue signals to the modular digital signal processor, wherein the plurality of receivers of one or more of the integrated circuits of the modular digital signal processor are configured to receive said beamformed analogue signals as the analogue input signals.

In some embodiments according to the third aspect, the analogue beamformer comprises: an analogue backend configured to receive a plurality of said analogue output signals from the plurality of DACs of one or more of the integrated circuits of the modular digital signal processor, wherein the analogue backend is configured to perform beamforming on said analogue output signals.

### Brief Description of the Drawings

Embodiments of the present invention will now be described, by way of example only, with reference to the accompanying drawings, in which:
Figure 1 illustrates an integrated circuit for a modular digital signal processor, according to an embodiment of the present invention;
Figure 2 illustrates the integrated circuit of Fig. 1 in a receive beamform (RxBF) mode configuration, according to an embodiment of the present invention;
Figure 3 illustrates the integrated circuit of Fig. 1 in a transmit beamform (TxBF) mode configuration, according to an embodiment of the present invention;
Figure 4 illustrates the integrated circuit of Fig. 1 in a bidirectional mode configuration, according to an embodiment of the present invention;
Figure 5 illustrates a modular digital signal processor comprising a plurality of integrated circuits, according to an embodiment of the present invention;
Figure 6 illustrates a modular digital signal processor including one or more non-beamforming signal paths for a gateway antenna, according to an embodiment of the present invention;
Figure 7 illustrates a modular digital signal processor comprising receive and transmit ranks of integrated circuits connected via a switch rank, according to an embodiment of the present invention;
Figure 8 illustrates a signal processing apparatus comprising a modular digital signal processor and an analogue beamformer, according to an embodiment of the present invention; and
Figure 9 illustrates a combined switching and beamforming network in an integrated circuit for a modular digital signal processor, according to an embodiment of the present invention.

### Detailed Description

In the following detailed description, only certain exemplary embodiments of the present invention have been shown and described, simply by way of illustration. As those skilled in the art would realise, the described embodiments may be modified in various different ways, all without departing from the scope of the present invention. Accordingly, the drawings and description are to be regarded as illustrative in nature and not restrictive. Like reference numerals designate like elements throughout the specification.

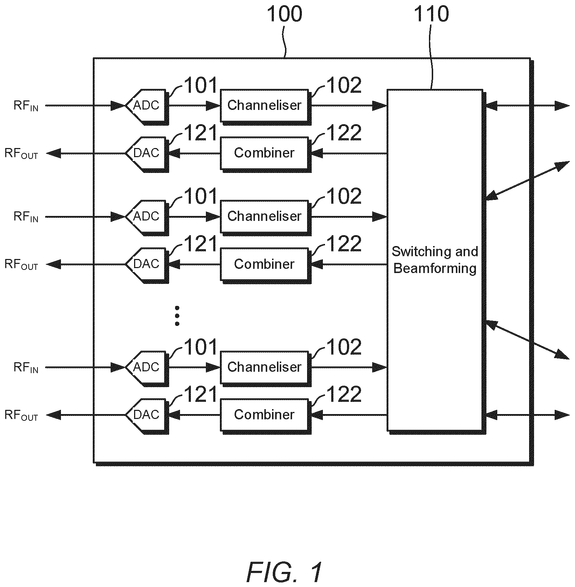

Referring now to Fig. 1, an integrated circuit 100 for a modular digital signal processor is illustrated, according to an embodiment of the present invention. The integrated circuit 100 may be implemented in various forms, depending on the embodiment. For example, in some embodiments the integrated circuit 100 may be implemented in the form of an application-specific integrated circuit (ASIC), whilst in other embodiments the integrated circuit 100 may be implemented in the form of a field-programmable gate array (FPGA).

The integrated circuit 100 comprises a plurality of ADCs 101, a plurality of channelisers 102, a combined switching and beamforming network 110, a plurality of combiners 122, and a plurality of DACs 121. Each ADC 101 is operable to convert a respective analogue input signal, RF_{IN}, to a respective one of a plurality of digital input signals. Here, the term "digital input signal" refers to a digital representation of the analogue RF_{IN} signal. Each channeliser 102 is operable to separate a respective one of the plurality of digital input signals into respective first channelised signals, which are then sent to the combined switching and beamforming network 110. Each combiner 122 is operable to receive a respective plurality of said first and/or second beamformed signals from the combined switching and beamforming network 110 and combine said first and/or second beamformed signals into a respective one of a plurality of digital output signals. Each DAC 121 is operable to convert a respective one of said plurality of digital output signals to a respective analogue output signal, RF_{OUT}.

Although the integrated circuit 100 of Fig. 1 comprises a plurality of ADCs 101, the embodiments of the present invention are not limited to this arrangement. The integrated circuit 100 may comprise at least one superheterodyne receiver instead of at least one of the plurality of ADCs 101 or may comprise a plurality of superheterodyne receivers instead of the plurality of ADCs 101.

The superheterodyne receiver may comprise at least one of a band-pass filter, a radio frequency (RF) amplifier, a local oscillator and a mixer. The superheterodyne receiver may mix the input radio frequency signal RF_{IN} with a local oscillator signal to generate an intermediate frequency (IF) which may then be demodulated. The local oscillator frequency is offset from the input RF carrier frequency, which creates images of the input RF signal RF_{IN}. Using the band-pass filter, the IF signal is passed, and all other images are rejected. The IF signal is converted to a digital signal and may then be demodulated in the digital domain. The IF signal converted to a digital signal is a digital input signal (a digital representation of the analogue RF_{IN} signal). The operation of the plurality of channelisers 102, the combined switching and beamforming network 110, the plurality of combiners 122, and the plurality of DACs 121 of the integrated circuit 100 are unchanged when the integrated circuit comprises at least one superheterodyne receiver instead of at least one of the plurality of ADCs 101.

The ADC 101 and the superheterodyne receiver are both operable to convert an analogue input signal RF_{IN} into a digital representation of the analogue RF_{IN} signal. The term "receiver" in the present disclosure is used to refer to either an ADC 101 or a superheterodyne receiver.

The integrated circuit 100 of Fig. 1 may further comprise at least one filter and at least one amplifier. In particular, an analogue input signal RF_{IN} may be input into a first band-pass filter or a first low-pass filter and may then be input into a first RF amplifier before being received by a respective ADC 101 of the plurality of ADCs 101. Additionally or alternatively, an analogue output signal RF_{OUT} output by a respective DAC 121 of the plurality of DACs 121 may be input into a second band-pass filter or a second low-pass filter and may then be input into a second RF amplifier before being output by the second RF amplifier.

The band-pass filter is an electronic circuit that allows a specific range of frequencies to pass through while attenuating frequencies outside that range. The low-pass filter is an electronic circuit that allows frequencies below a cutoff frequency to pass through while attenuating frequencies equal to or above the cutoff frequency. The filter is configured to remove noise from the analogue signal. The amplifier is configured to amplify the signal that has passed through the filter. The inclusion of the at least one filter and the at least one amplifier in the integrated circuit 100 does not affect the operation of the other components of the integrated circuit 100 shown in Fig. 1.

Different arrangements of the integrated circuit 100 have been described above. For the purpose of simplifying the description, the following describes the integrated circuit 100 including a plurality of ADCs 101, a plurality of channelisers 102, a combined switching and beamforming network 110, a plurality of combiners 122, and a plurality of DACs 121. However, it will be appreciated by the skilled person that the above described alternative arrangements are included within the scope of the present disclosure.

In the present context, the term "operable" means that the element in question (e.g. ADC 101, channeliser 102, etc.) is capable of performing the stated function during operation of the integrated circuit 100. However, as will become apparent from the following description, whether or not a particular element is operational (i.e. currently performing the stated function) at any given time will depend on how the integrated circuit is configured. Specifically, the integrated circuits disclosed herein, such as the integrated circuit 100 illustrated in Fig. 1, can be configured to perform different roles in a modular digital signal processor. Depending on the role for which any given integrated circuit 100 is currently configured, certain elements may be operational whilst others may be unused at any given time (i.e. not currently required).

In some embodiments, components that are unused in a certain configuration may be disabled (e.g. temporarily disabled) to save power. Examples of components within the integrated circuit 100 that may be disabled in certain circumstances include, but are not limited to: one or more beamforming engines within the combined switching and beamforming network 110; one or more of the ADCs 101; one or more of the DACs 121; and one or more serialisers and/or deserialisers for sending or receiving signals to or from said one or more other components.

Together, one ADC 101 and the corresponding channeliser 102 (i.e. the channeliser 102 that is arranged to receive the digital input signal produced by that particular ADC 101) can be referred to as an "input signal branch". Similarly, one combiner 122 and the corresponding DAC 121 (i.e. the DAC 121 that is arranged to receive the digital output signal produced by that particular combiner 122) can be referred to as an "output signal branch". The integrated circuit 100 may comprise any number of input signal branches and any number of output signal branches. In other words, the integrated circuit 100 may comprise any number of ADCs 101, channelisers 102, combiners 122, and DACs 121. In some embodiments, the number of input signal branches in the integrated circuit 100 may be equal to the number of output signal branches, as shown in Fig. 1. In other embodiments, the integrated circuit 100 may comprise a different number of output signal branches compared to the number of input signal branches. In some embodiments the ADCs 101 and/or DACs 121 may be omitted from the integrated circuit 100, such that the integrated circuit 100 receives and/or outputs digital signals as opposed to analogue signals.

Furthermore, although in the present embodiment one ADC 101 is illustrated per channeliser 102, and one DAC 121 is illustrated per combiner 122, in other embodiments a different number of ADCs 101 may be provided per channeliser 102, and/or a different number of DACs 121 may be provided per combiner 122. For example, in some embodiments the output of a single ADC 101 may be sent to two (or more) channelisers 102, potentially with each of said two or more channelisers 102 then operating on different frequency channels within the RF_{IN} signal that is digitised by that ADC 101.

The combined switching and beamforming network 110 is operable to perform switching and beamforming on signals that are inputted to the combined switching and beamforming network 110, to obtain a plurality of first beamformed signals. In this context, "switching" refers to the process of routing a signal through the switching and beamforming network 110 from a particular input to the desired output (or outputs), whilst "beamforming" refers to controlling the amplitude and/or phase of a signal relative to other signals passing through the switching and beamforming network 110. In this way, by performing beamforming in the combined switching and beamforming network 110 to control the relative amplitude and phases of a plurality of signals that are then outputted from the combined switching and beamforming network 110, it is possible to control the resulting beam pattern that is produced when the output signals are transmitted by a suitable antenna (e.g. a phased array antenna). Signals that have had their amplitude and/or phase adjusted as part of a beamforming process may be referred to as "beamformed" signals. In some embodiments other types of antennae may be used, for example a mechanically-steered antenna in the case of a gateway (GW) link.

Depending on how the integrated circuit 100 is configured in any given implementation, the signals that are inputted to the combined switching and beamforming network 110 may comprise the first channelised signals that are generated by one or more of the channelisers 102. The first channelised signals are signals that have been generated internally, i.e. within the integrated circuit 100. In some embodiments, the signals that are inputted to the combined switching and beamforming network 110 may comprise one or more signals that have been generated externally to the integrated circuit 100, for example by one or more other components of the modular digital signal processor.

Signals that are received from an external source (i.e. a source external to the integrated circuit 100) are referred to herein as "second signals", as distinct from signals that are received from sources within the integrated circuit 100, such as the first channelised signals. Depending on the configuration of the modular digital signal processor in any given embodiment, the second signals that are received by the combined switching and beamforming network 110 may comprise second channelised signals and/or second beamformed signals.

By performing both signal routing (switching) and digital beamforming (DBF) on the same chip, i.e in the same integrated circuit 100, the number of ranks within a digital signal processor can be reduced, lowering the total power consumption of the digital signal processor. Similarly, the number of chip-to-chip interconnects between nodes can be reduced, again reducing the power consumption. Other advantages of performing both switching and beamforming in the same integrated circuit 100 can include: more efficient use of beamforming engines (BFE) per beam formed; the ability to form wider beams with more elements per beam; reduced inter-chip synchronisation requirement; simplified routing software; and simplified system integration.

Furthermore, in some embodiments other DBFN functions may also be implemented within the integrated circuit 100, for example gain control. Performing more functions on a single chip in this way can further reduce the power consumption of the digital signal processor as a whole, by further reducing the number of ranks and the number of chip-to-chip interconnections (e.g. HSSL connections).

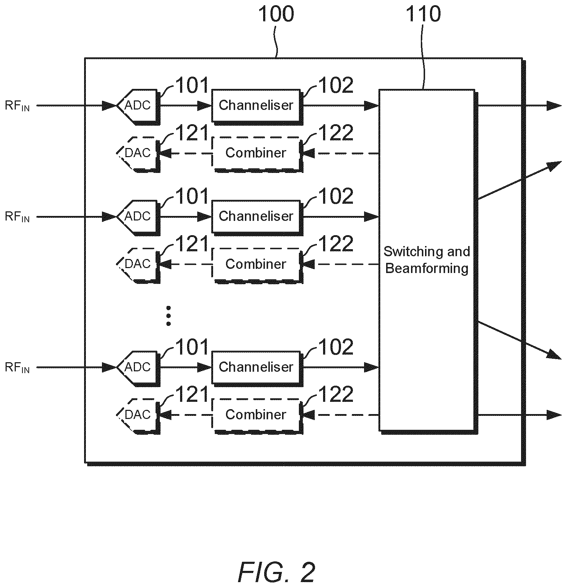

Referring now to Fig. 2, the integrated circuit 100 of Fig. 1 is illustrated in a receive beamform (RxBF) mode configuration, according to an embodiment of the present invention. When the integrated circuit 100 is configured in the RxBF mode, the output signal branches are not required. Accordingly, in some embodiments, some or all of the combiners 122 and/or some or all of the DACs 121 in the integrated circuit 100 can be disabled (i.e. deactivated) when the integrated circuit 100 is operating in the RxBF mode, to reduce a power consumption of the integrated circuit 100. In the embodiment illustrated in Fig. 2 all of the output signal branches are disabled, as indicated by the use of dashed lines for the DACs 121 and combiners 122.

In the RxBF mode, the combined switching and beamforming network 110 is operable to route one or more of said first channelised signals and first beamformed signals to one or more other components of the modular digital signal processor, for example to collect larger numbers of antenna elemental contributions together than can be achieved on one integrated circuit 100. The combined switching and beamforming network 110 can be connected to one or more other components of the modular digital signal processor via any suitable connections, for example a serial interface such as a High Speed Serial Link (HSSL), an Embedded Multi-die Interconnect Bridge (EMIB), a Universal Chiplet Interconnect Express (UCIe) interface, a through-silicon via (TSV) connection, or a parallel interface.

Also, in the RxBF mode the combined switching and beamforming network 110 is configured to perform switching and beamforming on the first channelised signals that are generated by the channelisers 102 of the integrated circuit 100, to obtain the plurality of first beamformed signals. The combined switching and beamforming network 110 can be configured to route each first beamformed signal to its required destination, for example a combined switching and beamforming network of another integrated circuit in the modular digital signal processor. As well as routing first beamformed signals in this way, the combined switching and beamforming may be configured to route one or more of the first channelised signals to respective destinations as required, for example to combined switching and beamforming networks of other integrated circuits in the modular digital signal processor, without performing beamforming on said one or more first channelised signals.

In other words, the signals that are outputted by the combined switching and beamforming network 110 can include only beamformed signals (i.e. the first beamformed signals), or can include a combination of beamformed signals and non-beamformed signals (i.e. one or more first channelised signals, without beamforming). In general, the combined switching and beamforming network 110 can be configured to perform beamforming on any given first channelised signal as it passes through the combined switching and beamforming network 110, as required.

For example, in some embodiments the integrated circuit may be included in a modular digital signal processor onboard a communications satellite comprising a plurality of antennae (e.g. one or more phase antenna arrays). Uplink signals received by one or more of the antennae may be inputted to the modular digital signal processor as the RF_{IN} analogue input signals, and the RF_{OUT} analogue output signals may be sent to one of the more of the antennae for downlink transmission. In some such embodiments, some of the antenna may be required to function as gateway antennae, in which signals received by one of more uplink gateway antennae are routed through the modular digital signal processor to one or more downlink gateway antennae without TxBF beamforming being applied.

For example, signals that are to be routed to a Tx Gateway antenna would not typically need to have beamforming applied. However, in some scenarios RxBF beamforming may still be applied to signals that are routed to a Tx gateway antenna. For example, the source of gateway traffic is typically from individual users (i.e. from individual received beams) and therefore requires RxBF to resolve the individual user beams. An example of a 'return' link may therefore be RxBF to Tx (i.e. RxBF beamforming, but without TxBF beamforming). Similarly, an examples of a 'forward' link may be Rx to TxBF. As a further example, in some embodiments 'local gateway' links may be implemented, e.g. through a phased array antenna. In such implementations, the path for a local gateway would be RxBF to TxBF. In such a scenario, the combined switching and beamforming network 110 of an integrated circuit 100 in the modular digital signal processor can be configured to route first channelised signals from the one or more uplink gateway antennae to one or more other components of the modular digital signal processor with or without RxBF or TxBF beamforming being applied, as required.

By implementing beamforming within the integrated circuit 100 in the RxBF configuration (i.e. by configuring the combined switching and beamforming network 110 to perform beamforming on some or all of the first channelised signals), the integrated circuit 100 can be configured to resolve one or more incoming beams received by a plurality of receive antennae.

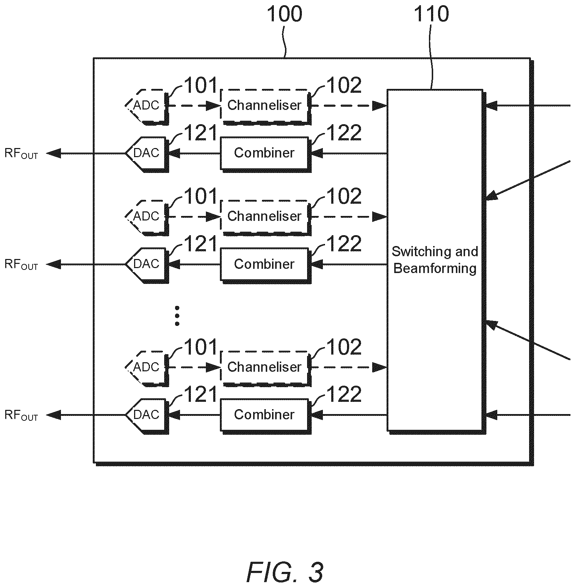

Referring now to Fig. 3, the integrated circuit 100 of Fig. 1 is illustrated in a transmit beamform (TxBF) mode configuration, according to an embodiment of the present invention. When the integrated circuit 100 is configured in the TxBF mode, the input signal branches are not required. Accordingly, in some embodiments, some or all of the ADCs 101 and/or some or all of the channelisers 102 in the integrated circuit 100 can be disabled (i.e. deactivated) when the integrated circuit 100 is operating in the TxBF mode, to reduce a power consumption of the integrated circuit 100. In the embodiment illustrated in Fig. 3 all of the input signal branches are disabled, as indicated by the use of dashed lines for the ADCs 101 and channelisers 102. As described above, other examples of components within the integrated circuit 100 that may be disabled in certain circumstances include, but are not limited to: one or more beamforming engines within the combined switching and beamforming network 110; one or more of the DACs 121; one or more combiners 121; and one or more serialisers and/or deserialisers for sending or receiving signals to or from said one or more other components.

In the TxBF mode, since the integrated circuit 100 does not receive any RFIN analogue input signals, the only signals that are inputted to the integrated circuit 100 are the second signals received by the combined switching and beamforming network 110 (i.e. channelised signals and/or beamformed signals from other components in the modular digital signal processor, such as other integrated circuits 100). Hence, in the TxBF mode the combined switching and beamforming network 110 is configured to perform switching and beamforming on the second signals to obtain the plurality of first beamformed signals. Each of the first beamformed signals is then routed by the combined switching and beamforming network 110 to one or more of the output signal branches (i.e. one or more of the combiners 122) as required. As described above with reference to Fig. 2, the combined switching and beamforming network 110 can be connected to one or more other components of the modular digital signal processor via any suitable connections, for example via HSSL connections or any other suitable interface.

In some embodiments, in the TxBF mode the combined switching and beamforming network 110 may be configured to route one or more of the second signals to one or more of the output signal branches without performing beamforming on those second signal(s). In other words, in the TxBF mode the combined switching and beamforming network 110 may only perform beamforming on some, but not all, of the second signals that are received from other components in the modular digital signal processor. Alternatively, in the TxBF mode the combined switching and beamforming network 110 may perform beamforming on all of the second signals received by the integrated circuit 100. As with the RxBF mode, in the RxBF mode the combined switching and beamforming network 110 can be configured to perform beamforming on any given second signal as it passes through the combined switching and beamforming network 110, as required.

By implementing beamforming within the integrated circuit 100 in the TxBF configuration (i.e. by configuring the combined switching and beamforming network 110 to perform beamforming on some or all of the second signals), the integrated circuit 100 can be configured to form one or more downlink beams in the desired direction(s).

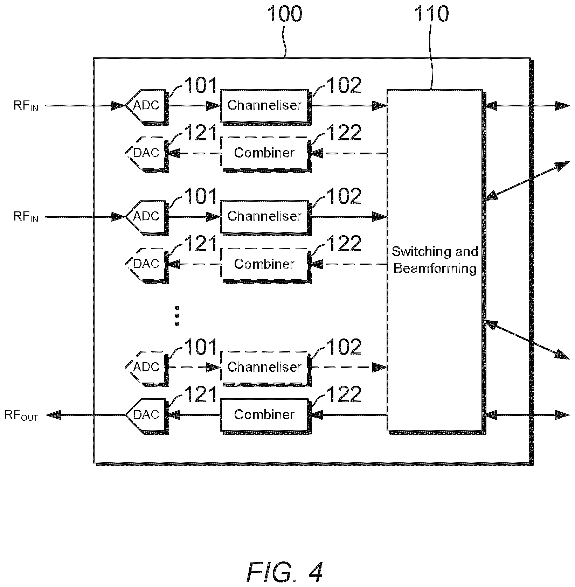

Referring now to Fig. 4, the integrated circuit 100 of Fig. 1 is illustrated in a bidirectional mode configuration, according to an embodiment of the present invention. When the integrated circuit 100 is configured in the bidirectional mode, one or more of the input signal branches and/or one or more of the output signal branches may not be required, depending on the exact configuration used. Accordingly, in some embodiments, the integrated circuit 100 can be configured to disable (i.e. deactivate) one or more of the ADCs 101, DACs 121, channelisers 102 and/or combiners 122 that are not required by a current configuration of the integrated circuit 100 when operating in the bidirectional mode, to reduce a power consumption of the integrated circuit 100. In the embodiment illustrated in Fig. 4, disabled ADCs 101, DACs 121, channelisers 102 and combiners 122 are indicated by the use of dashed lines, in a similar manner to Figs. 2 and 3.

As with the RxBF mode, in the bidirectional mode the combined switching and beamforming network 110 is operable to route one or more of said first channelised signals and first beamformed signals to one or more other components of the modular digital signal processor, for example via HSSL connections or any other suitable interface, as described above.

In the bidirectional mode, the combined switching and beamforming network 110 is configured to receive the first channelised signals from one or more of the channelisers 102 of the integrated circuit 100. In other words, the combined switching and beamforming network 110 receives channelised signals that have been generated internally within the integrated circuit 100. At the same time, the combined switching and beamforming network 110 is configured to route at least some of the first beamformed signals to one or more of the combiners 122 of the integrated circuit 100. In this way, the integrated circuit 100 can process both input RF_{IN} and output RF_{OUT} signals simultaneously, hence the operating mode being referred to as "bidirectional". In contrast, in the RxBF mode the integrated circuit 100 only processes input signals RF_{IN}, whilst in the TxBF mode the integrated circuit only processes output signals RF_{OUT}.

In some embodiments, in the bidirectional mode the combined switching and beamforming network 110 may be configured to route all of the first channelised signals to one or more other components of the modular digital signal processor, and to form the first beamformed signals using only second signals (i.e. channelised and/or beamformed signals that have come from another component of the modular digital signal processor). In such embodiments, signals that are received on frequency channels within the RF_{IN} analogue input signals processed by the integrated circuit may all be routed to other components of the modular digital signal processor, without being included in the RF_{OUT} analogue output signals that are produced by the same integrated circuit.

Alternatively, in some embodiments one or more of the first channelised signals (i.e. channelised signals that have been generated within the integrated circuit 100 by one or more of the channelisers 102) may be used to form at least some of the first beamformed signals in the combined switching and beamforming network 110, such that signals on the corresponding frequency channels are routed to one or more combiners 122 of the same integrated circuit 100. Signals on those frequency channel(s) can therefore be considered to perform a "u-turn" within the integrated circuit, when drawn schematically in the layout shown in Figs. 1-4, in the sense that a signal received in a given frequency channel initially travels from left to right through one of the input signal branches, and is then routed back to one of the output signal branches by the combined switching and beamforming network 110.

As a further alternative, in some embodiments the combined switching and beamforming network 110 may be configured to only use the first channelised signals to form the first beamforming signals, without receiving any second signals (i.e. second channelised signals or second beamforming signals) from external sources. In some such embodiments, the external connections (e.g. HSSL interfaces) shown by the bidirectional arrows on the right-most side of the diagram in Fig. 4 may be omitted. In such cases, the integrated circuit 100 can in effect function as a standalone digital signal processor. Such a digital signal processor could be considered to be a special case of a modular digital signal processor, in which the number of modules is equal to one (i.e. a single integrated circuit).

In embodiments in which the combined switching and beamforming network 110 does not include any form of interface (e.g. HSSL ports) for connecting the combined switching and beamforming network 110 to other components, the integrated circuit 100 may therefore comprise: a plurality of ADCs 101 each configured to convert a respective analogue input signal to a respective one of a plurality of digital input signals; a plurality of channelisers 102 each configured to separate a respective one of the plurality of digital input signals into respective first channelised signals; a combined switching and beamforming network 110 configured to perform switching and beamforming on said first channelised signals to obtain a plurality of first beamformed signals; a plurality of combiners 122 each configured to combine a respective plurality of said first beamformed signals into a respective one of a plurality of digital output signals; and a plurality of DACs 121 each configured to convert a respective one of said plurality of digital output signals to a respective analogue output signal.

In general, therefore, the signals that are used to form the first beamformed signals in the combined switching and beamforming network 110 may come from different sources (i.e. from within the integrated circuit 100 and/or from one or more other components of the modular digital signal processor), depending on the configuration of the combined switching and beamforming network 110 in any given scenario.

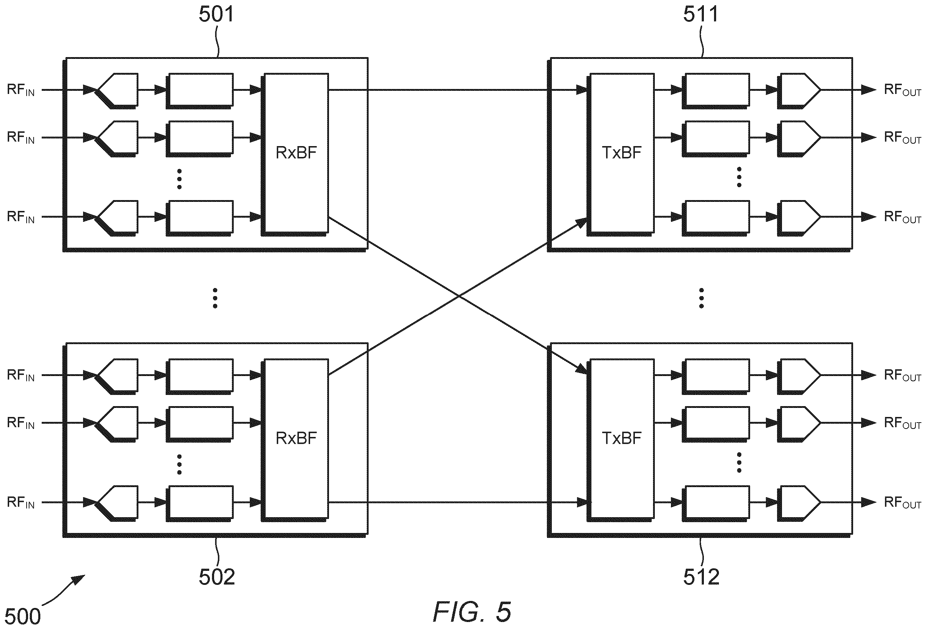

Referring now to Fig. 5, a modular digital signal processor 500 comprising a plurality of integrated circuits 501, 502, 511, 512 is illustrated, according to an embodiment of the present invention. Each of the integrated circuits 501, 502, 511, 512 comprises an integrated circuit such as the integrated circuit 100 described above with reference to Figs. 1 to 4. In some embodiments the modular digital signal processor 500 may comprise other components, for example other types of integrated circuit, in addition to a plurality of integrated circuits as described with reference to Figs. 1 to 4.

The modular digital signal processor 500 comprises a plurality of first integrated circuits 501, 502 and a plurality of second integrated circuits 511, 512. Each of the first integrated circuits 501, 502 comprises an integrated circuit configured in the RxBF mode, as described above with reference to Fig. 2. Each of the second integrated circuits 511, 512 comprises an integrated circuit configured in the TxBF mode, as described above with reference to Fig. 3. As shown in Fig. 5, in the present embodiment the plurality of integrated circuits 501, 502, 511, 512 are arranged into a receive rank comprising the first integrated circuits 501, 502 configured in the RxBF mode, and a transmit rank comprising the second integrated circuits 511, 512 configured in the TxBF mode.

The combined switching and beamforming network 110 of each of the first integrated circuits 501, 502 is connected to the combined switching and beamforming network 110 of each of the second integrated circuits 511, 512, for example via HSSL interfaces as described above. In this way, the other components of the modular digital signal processor 500, from which the combined switching and beamforming network of each of the second integrated circuits 511, 512 is configured to receive the second signals, comprise the first integrated circuits 501, 502.

In some embodiments, one or more of the integrated circuits 501, 502, 511, 512 may operate in the bidirectional mode, as described above with reference to Fig. 4. For example, if one 501 of the first integrated circuits 501, 502 is configured to operate in the bidirectional mode, the combined switching and beamforming network 110 of said one 501 of the first integrated circuits 501, 502 can be provided with one or more connections (e.g. HSSL interfaces) to the combined switching and beamforming network(s) 110 of one or more other first integrated circuits 502, so as to receive second signals from said one or more other first integrated circuits 502. Similarly, if one 511 of the second integrated circuits 511, 512 is configured to operate in the bidirectional mode, the combined switching and beamforming network 110 of said one 511 of the second integrated circuits 511, 512 can be provided with one or more connections (e.g. HSSL interfaces) to the combined switching and beamforming network(s) 110 of one or more other second integrated circuits 512, so as to send channelised and/or beamformed signals to said one or more other second integrated circuits 512.

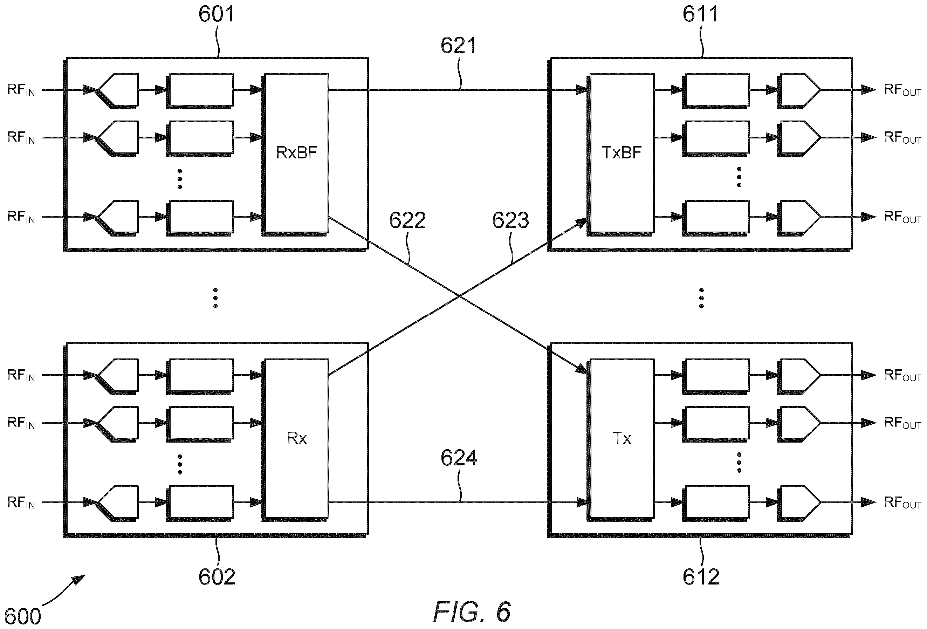

Referring now to Fig. 6, a modular digital signal processor 600 including one or more non-beamforming signal paths for a gateway antenna is illustrated, according to an embodiment of the present invention. As with Fig. 5, each of the integrated circuits 601, 602, 611, 612 comprises an integrated circuit such as the integrated circuit 100 described above with reference to Figs. 1 to 4. In some embodiments the modular digital signal processor 600 may comprise other components, for example other types of integrated circuit, in addition to a plurality of integrated circuits as described with reference to Figs. 1 to 4.

Like the embodiment of Fig. 5, the modular digital signal processor 600 of the present embodiment comprises a plurality of first integrated circuits 601, 602 and a plurality of second integrated circuits 611, 612. One or more of the first integrated circuits 601, 602 are configured in the RxBF mode, and one or more of the second integrated circuits 611, 612 are configured in the TxBF mode. However, in the present embodiment at least one of the first integrated circuits 602 is configured in an Rx mode without beamforming (i.e. as distinct from the RxBF mode), and at least one of the second integrated circuits 612 is configured in a Tx mode without beamforming (i.e. as distinct from the TxBF mode).

The connections 622, 623 between the combined switching and beamforming networks 110 of a first integrated circuit 601 operating in the RxBF mode and a second integrated circuit 612 operating in the Tx mode, or between the combined switching and beamforming networks 110 of a first integrated circuit 602 operating in the Rx mode and a second integrated circuit 611 operating in the TxBF mode may be referred to as "star" links, in contrast to the connection(s) 621 between integrated circuits 601, 611 operating in the RxBF and TxBF modes, which may be referred to as "mesh" links. A connection 624 between integrated circuits 602, 612 operating in the Rx and Tx modes carries signals that do not have any beamforming applied, and can for example be used to route signals between gateway antennae.

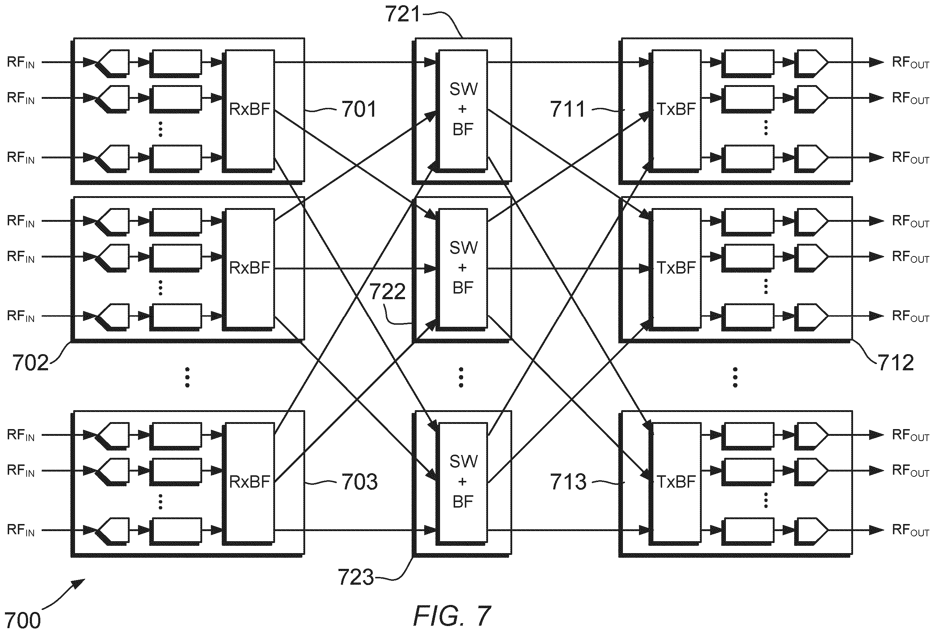

Referring now to Fig. 7, a modular digital signal processor 700 comprising receive and transmit ranks of integrated circuits connected via a switch rank is illustrated, according to an embodiment of the present invention. The addition of a switch rank can allow larger architectures with greater flexibility and reliability.

Like the embodiments of Figs. 5 and 6, the modular digital signal processor 700 of the present embodiment comprises a plurality of first integrated circuits 701, 702, 703 arranged into a receive rank and a plurality of second integrated circuits 711, 712, 713 arranged into a transmit rank. Also, like the embodiment of Fig. 5, in the present embodiment each of the first integrated circuits 701, 702, 703 comprises an integrated circuit configured in the RxBF mode, and each of the second integrated circuits 711, 712, 713 comprises an integrated circuit configured in the TxBF mode. However, in other embodiments similar to the one shown in Fig. 7, i.e. in which a modular digital signal processor 700 comprises receive and transmit ranks of integrated circuits connected via a switch rank, at least one of the first integrated circuits 701, 702, 703 may be configured in an Rx mode without beamforming, and/or at least one of the second integrated circuits 612 is configured in a Tx mode without beamforming, in a similar manner to the embodiment described above with reference to Fig. 6.

The switch rank comprises one or more switches 721, 722, 723 for routing signals between the receive rank and the transmit rank. In the present embodiment, the switch rank comprises a plurality of switches 721, 722, 723, each of which comprises an integrated circuit such as the integrated circuit 100 described above with reference to Figs. 1 to 4. The respective combined switching and beamforming networks 110 of each integrated circuit 721, 722, 723 within the switch rank are configured to route signals between the receive rank and the transmit rank. In other words, the combined switching and beamforming networks 110 of each integrated circuit 721, 722, 723 in the switch rank are configured to perform switching on signals received from the combined switching and beamforming networks 110 of integrated circuits 701, 702, 703 in the receive rank, to thereby route the signals to the combined switching and beamforming networks 110 of integrated circuits 711, 712, 713 in the transmit rank. Within each integrated circuit 721, 722, 723 in the switch rank, some or all of the input signal branches and output signal branches may be disabled to reduce a power consumption of the integrated circuit 721, 722, 723. In other embodiments different types of switches may be used in the switch rank, instead of or in addition to integrated circuits 100. For example, in some embodiments the switch rank may comprise one or more modems with packet switches, instead of or in addition to one or more circuit switches (e.g. comprising integrated circuits 100 as described above).

In the present embodiment, the combined switching and beamforming networks 110 of one or more of the integrated circuits 721, 722, 723 in the switch rank are further configured to perform beamforming on signals as they are routed between the receive rank and the transmit rank. Implementing beamforming within the switch rank in this way can provide greater flexibility without additional hardware, and without the need for additional interconnections such as HSSL connections (e.g. compared to a hypothetical alternative arrangement comprising one or more beamforming ranks in addition to the receive/switch/transmit ranks). However, in other embodiments one or more integrated circuits 721, 722, 723 within the switch rank may be configured to perform switching without beamforming. In such embodiments, beamforming engine(s) within the combined switching and beamforming network 110 of any such integrated circuits 721, 722, 723 within the switch rank may be disabled, to reduce a power consumption of the integrated circuit 721, 722, 723.

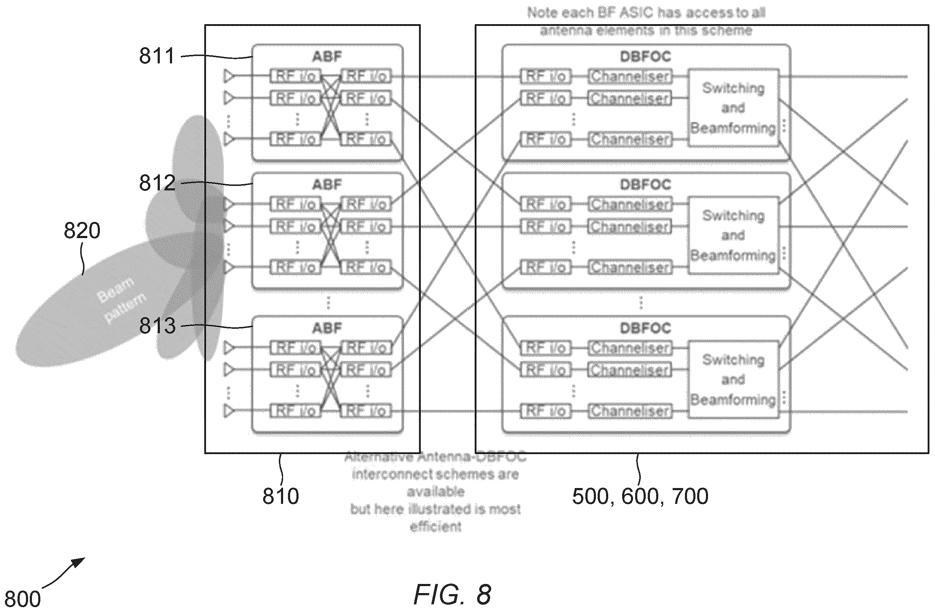

Referring now to Fig. 8, a signal processing apparatus 800 comprising a modular digital signal processor 500, 600, 700 and an analogue beamformer 810 is illustrated, according to an embodiment of the present invention. Any of the modular digital signal processors described herein may be used in the signal processing apparatus 800, including but not limited to the modular digital signal processors 500, 600, 700 described above with reference to Figs. 5, 6 and 7. At least some of the combined switching and beamforming networks 110 of the plurality of integrated circuits of the modular digital signal processor 500, 600, 700 are configured to perform beamforming, such that beamforming is performed in both the analogue and digital domains in the signal processing apparatus 800. By combining the modular digital signal processor 500, 600, 700 with an analogue beamformer 810, the total capacity of the signal processing apparatus 800 can be increased in comparison to the modular digital processor 500, 600, 700 on its own.

As shown in Fig. 8, in the present embodiment the analogue beamformer 810 comprises a plurality of analogue beamforming modules 811, 812, 813. Each analogue beamforming module 811, 812, 813 may also be referred to as an analogue beamforming 'tile' 811, 812, 813. Similarly, each integrated circuit 100 of the modular digital signal processor 500, 600, 700 may be referred to as a digital beamforming tile. The analogue beamforming tiles 811, 812, 813 process analogue (e.g. radio frequency, RF) signals that are received or transmitted via a plurality of antenna, for example elements of a phased array. The analogue beamforming tiles 811, 812, 813 perform beamforming in the analogue domain to resolve one or more beams 820.

In the present embodiment, the analogue beamformer 810 is implemented as an analogue frontend configured to provide a plurality of beamformed analogue signals to the modular digital signal processor 500, 600, 700, such that the plurality of ADCs 101 of one or more of the integrated circuits 100 of the modular digital signal processor 500, 600, 700 are configured to receive said beamformed analogue signals as the analogue input signals. In other embodiments, the analogue beamformer may be implemented as an analogue backend configured to receive a plurality of analogue output signals from the plurality of DACs 121 of one or more of the integrated circuits 100 of the modular digital signal processor 500, 600, 700, such that the analogue backend is configured to perform beamforming on said analogue output signals. Furthermore, in some embodiments, a signal processing apparatus 800 may comprise both an analogue frontend beamformer and an analogue backend beamformer, in addition to the modular digital signal processor 500, 600, 700.

In more detail, in the present embodiment each input port of each digital beamforming tile (i.e. each integrated circuit 110) in the receive rank of the modular digital signal processor 500, 600, 700 is connected to each analogue beamforming tile 811, 812, 813. Therefore, the number of analogue beamforming tiles 811, 812, 813 is equal to the number of input ports on each digital beamforming tile in the receive rank. Purely by way of an example, if each digital beamforming tile (i.e. each integrated circuit 110) in the receive rank comprises 10 input ports for receiving analogue input signals, the analogue beamformer 810 may comprise 10 analogue beamforming tiles 811, 812, 813. This arrangement offers maximum flexibility, in terms of the ability to route a signal from any given uplink antenna to any given downlink antenna, since an analogue signal received by any one of the analogue beamforming tiles 811, 812, 813 can be routed to any one of the digital beamforming tiles. However, in other embodiments the number of analogue beamforming tiles 811, 812, 813 may be different from (e.g. less than) the number of input ports on each digital beamforming tile in the receive rank.

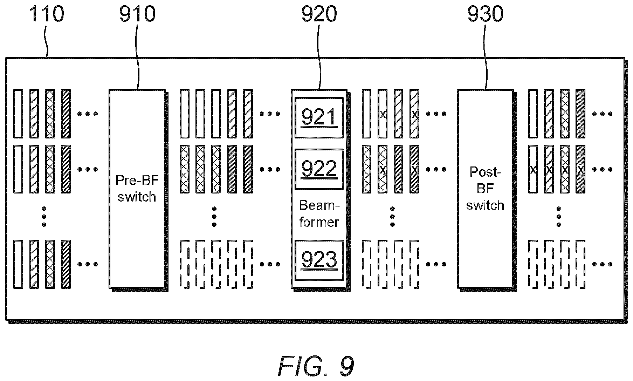

Referring now to Fig. 9, a combined switching and beamforming network 110 in an integrated circuit for a modular digital signal processor is illustrated, according to an embodiment of the present invention. For example, the combined switching and beamforming networks 110 in the integrated circuits of any of the modular digital signal processors 500, 600, 700 described above, such as those of Figs. 5, 6 and 7, may have a structure as shown in Fig. 9.

The combined switching and beamforming network 110 comprises a pre-beamforming (pre-BF) switch 910, a beamformer 920, and a post-beamforming (post-BF) switch 930. The beamformer 920 comprises a plurality of BeamForming Engines (BFE) 921, 922, 923, each of which is configured to apply suitable gain and/or phase adjustments depending on the desired beam direction and/or pattern. The capacity (bandwidth) that can be formed in a BFE is inversely proportional to the number of ports per beam (Pt/Bm), i.e. the number of DBF RF ports to be collected in one place. By limiting the number of Pt/Bm to those on one integrated circuit 100, the beamformed capacity per integrated circuit 100 may be increased (or alternatively the number of active BFEs can be reduced, thereby saving power).

In Fig. 9, different hatching patterns are used to distinguish signals in different Time Division Multiplex (TDM) slots. The pre-beamforming switch 910 can allow more efficient BFE usage, by switching collection of beam contributions (e.g. signals corresponding to the same TDM slots on different input ports) into the fewest BFE, such that unused BFEs can then be disabled to save power. In other words, the pre-beamforming switch 910 may be configured to direct the plurality of first channelised signals and/or the plurality of second signals to a subset of the BFEs 921, 922. In the example shown in Fig. 9, the pre-beamforming switch 910 is configured to direct the plurality of first channelised signals and/or the plurality of second signals to a first BFE 921 and to a second BFE 922. In this configuration, a third BFE 923 is unused, as indicated by the use of dashed lines in the lowermost signal path after the pre-beamforming switch 910. Accordingly, the integrated circuit 100 may be configured to disable one or more unused BFEs 923, thereby to reduce a power consumption of the integrated circuit 100. The pre-beamforming switch 910 may, for example, be a time-space (TS) switch.

In Fig. 9, the signal blocks labelled with an 'X' downstream of the beamformer 910 and the post-beamforming switch 930 denote beams being formed with frequency reuse. Embodiments of the invention can enable lossless frequency reuse, since beamforming is performed in the digital domain and as such is lossless. The post-beamforming switch 930 can allow for fully flexible TDM ordering to be routed over the interconnects to another integrated circuit 100 of the modular digital signal processor 500, 600, 700 HSSL. This offers two benefits: firstly, reordering does not need to be performed by subsequent stages of the digital signal processor 500, 600, 700 (e.g. if routed to a modem); and secondly, the routing algorithm through the digital signal processor 500, 600, 700 can be simplified. The post-beamforming switch 930 may, for example, be a time-space-time (TST) switch.

Embodiments of the invention have been described in which a plurality of integrated circuits 100 can be combined to form a modular digital signal processor 500, 600, 700, for example as shown in Figs. 5, 6 and 7. In some such embodiments, some or all of the integrated circuits 100 within a modular digital signal processor may be implemented in the form of chiplets packaged on a single die, with interconnects between the chiplets as required. In other words, each chiplet may perform the functions of one of the integrated circuits 100, such that the plurality of chiplets on a single die together function as a plurality of integrated circuits within the modular digital signal processor 500, 600, 700. This approach can further reduce the overall power consumption of the modular signal processor 500, 600, 700, by further reducing the number of chip-to-chip connections.

Whilst certain embodiments of the invention have been described herein with reference to the drawings, it will be understood that many variations and modifications will be possible without departing from the scope of the invention as defined in the accompanying claims.

## Claims

1. An integrated circuit for a modular digital signal processor, the integrated circuit comprising:
a plurality of receivers, each operable to convert a respective analogue input signal to a respective one of a plurality of digital input signals;
a plurality of channelisers each operable to separate a respective one of the plurality of digital input signals into respective first channelised signals;
a combined switching and beamforming network operable to perform switching and beamforming on said first channelised signals and/or on one or more second signals to obtain a plurality of first beamformed signals, wherein said one or more second signals comprise second channelised signals and/or second beamformed signals received from one or more other components of the modular digital signal processor;
a plurality of combiners each operable to combine a respective plurality of said first and/or second beamformed signals into a respective one of a plurality of digital output signals; and
a plurality of digital-to-analogue converters, DACs, each operable to convert a respective one of said plurality of digital output signals to a respective analogue output signal.

2. The integrated circuit of claim 1, wherein at least one of the plurality of receivers is an analogue-to-digital converter, ADC.

3. The integrated circuit of claim 1 or 2, wherein at least one of the plurality of receivers is a superheterodyne receiver.

4. The integrated circuit of any one of claims 1 to 3, wherein the integrated circuit is configured in a transmit beamform, TxBF, mode in which the combined switching and beamforming network is configured to perform switching and beamforming on said second signals to obtain the plurality of first beamformed signals.

5. The integrated circuit of claim 4, wherein the integrated circuit is configured to disable some or all of the plurality of channelisers, and/or some or all of the plurality of receivers, and/or some of the plurality of combiners, and/or some of the plurality of DACs when operating in the TxBF mode, thereby to reduce a power consumption of the integrated circuit.

6. The integrated circuit of claim 1, wherein the combined switching and beamforming network is further operable to route one or more of said first channelised signals and first beamformed signals to one or more other components of the modular digital signal processor.

7. The integrated circuit of claim 2, wherein the integrated circuit is configured in a receive beamform, RxBF, mode in which the combined switching and beamforming network is configured to perform switching and beamforming on said first channelised signals to obtain the plurality of first beamformed signals.

8. The integrated circuit of claim 7, wherein the integrated circuit is configured to disable some or all of the plurality of combiners, and/or some or all of the plurality of DACs, and/or some of the plurality of channelisers, and/or some of the plurality of receivers when operating in the RxBF mode, thereby to reduce a power consumption of the integrated circuit.

9. The integrated circuit of claim 6, wherein the integrated circuit is configured in a bidirectional mode in which the combined switching and beamforming network is configured to receive said first channelised signals from one or more of the plurality of channelisers of the integrated circuit, and
wherein the combined switching and beamforming network is configured to route at least some of the first beamformed signals to one or more of said plurality of combiners of the integrated circuit.

10. The integrated circuit of claim 9, wherein the combined switching and beamforming network is configured to perform switching and beamforming on said first channelised signals to obtain the plurality of first beamformed signals.

11. The integrated circuit of claim 9 or 10, wherein the integrated circuit is configured to disable one or more of the receivers, DACs, channelisers and/or combiners that are not required by a current configuration of the integrated circuit when operating in the bidirectional mode, thereby to reduce a power consumption of the integrated circuit.

12. The integrated circuit of any one of claims 1 to 11, wherein the combined switching and beamforming network comprises a plurality of beamforming engines.

13. The integrated circuit of claim 12, wherein the integrated circuit is configured to disable said one or more unused beamforming engines when operating in the current configuration, thereby to reduce a power consumption of the integrated circuit.

14. The integrated circuit of any one of claim 12 or 13, wherein the combined switching and beamforming network comprises:
a pre-beamforming switch;
a beamformer comprising said plurality of beamforming engines; and
a post-beamforming switch.

15. The integrated circuit of claim 14 when dependent on claim 13, wherein the pre-beamforming switch is configured to direct the plurality of first channelised signals and/or the plurality of second signals to a subset of the plurality of beamforming engines, such that one or more other ones of the plurality of beamforming engines are unused in a current configuration of the integrated circuit.

16. The integrated circuit of any one of claims 1 to 15, comprising:
a plurality of serialisers and/or a plurality of deserialisers for sending or receiving signals to or from said one or more other components,
wherein the integrated circuit is configured to disable one or more unused ones of said plurality of serialisers and/or said plurality of deserialisers, thereby to reduce a power consumption of the integrated circuit.

17. A modular digital signal processor, comprising:
a plurality of integrated circuits according to any one of claims 1 to 16.

18. The modular digital signal processor of claim 17, wherein the plurality of integrated circuits comprise:
one or more first integrated circuits according to any one of claims 1 to 16; and
one or more second integrated circuits according to any one of claims 1 to 16,
wherein said one or more other components of the modular digital signal processor, from which the combined switching and beamforming network of each of said one or more second integrated circuits is configured to receive said one or more second signals, comprise the one or more first integrated circuits.

19. The modular digital signal processor of claim 17 or 18, wherein the plurality of integrated circuits are arranged into:
a receive rank comprising one or more integrated circuits according to claim 7 or 8, configured in the RxBF mode; and
a transmit rank comprising one or more integrated circuits according to claim 4 or 5, configured in the TxBF mode.

20. The modular digital signal processor of claim 19, comprising:
a switch rank for routing signals between the receive rank and the transmit rank.

21. The modular digital signal processor of claim 20, wherein the switch rank comprises:
one or more integrated circuits according to any one of claims 1 to 16, wherein respective combined switching and beamforming networks of said one or more integrated circuits of the switch rank are configured to route said signals between the receive rank and the transmit rank.

22. The modular digital signal processor of claim 21, wherein the combined switching and beamforming networks of said one or more integrated circuits of the switch rank are further configured to perform beamforming on said signals routed between the receive rank and the transmit rank.

23. A signal processing apparatus, comprising:
a modular digital signal processor according to any one of claims 17 to 22, wherein at least some of the combined switching and beamforming networks of the plurality of integrated circuits of the modular digital signal processor are configured to perform beamforming; and
an analogue beamformer.

24. The signal processing apparatus of claim 23, wherein the analogue beamformer comprises:
an analogue frontend configured to provide a plurality of beamformed analogue signals to the modular digital signal processor,
wherein the plurality of receivers of one or more of the integrated circuits of the modular digital signal processor are configured to receive said beamformed analogue signals as the analogue input signals.

25. The signal processing apparatus of claim 23 or 24, wherein the analogue beamformer comprises:
an analogue backend configured to receive a plurality of said analogue output signals from the plurality of DACs of one or more of the integrated circuits of the modular digital signal processor,
wherein the analogue backend is configured to perform beamforming on said analogue output signals.
